(19) Europäisches Patentamt
European Patent Office
Office européen des brevets

(11) **EP 3 608 702 A1**

(12) **EUROPEAN PATENT APPLICATION**
published in accordance with Art. 153(4) EPC

(43) Date of publication:
**12.02.2020 Bulletin 2020/07**

(51) Int Cl.:
*G02B 27/01* *(2006.01)*        *B60K 35/00* *(2006.01)*
*G02B 13/18* *(2006.01)*        *G02B 17/08* *(2006.01)*

(21) Application number: **18780379.6**

(22) Date of filing: **16.03.2018**

(86) International application number:
**PCT/JP2018/010499**

(87) International publication number:
**WO 2018/186149 (11.10.2018 Gazette 2018/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2017 JP 2017075683**

(71) Applicant: **Panasonic Intellectual Property Management Co., Ltd.**
**Osaka-shi, Osaka 540-6207 (JP)**

(72) Inventor: **YONETANI Yusuke**
**Osaka-shi, Osaka 540-6207 (JP)**

(74) Representative: **Eisenführ Speiser Patentanwälte Rechtsanwälte PartGmbB Postfach 10 60 78 28060 Bremen (DE)**

(54) **HEAD-UP DISPLAY SYSTEM, AND MOBILE OBJECT PROVIDED WITH HEAD-UP DISPLAY SYSTEM**

(57)    A head-up display system of the present disclosure includes a display device that displays an image and a projection optical system that projects on the display member the image displayed on the display device. The projection optical system includes mirror $M_L$ that reflects a light beam toward the display member and mirror $M_{L-1}$ that reflects the light beam toward mirror $M_L$. Then, the projection optical system satisfies following condition (1):

$$0.01 < |M_LD/M_LW| \times |M_{L-1}Z/M_{L-1}W| \qquad (1)$$

where
$M_LD$ is depth of mirror $M_L$
$M_LW$ is lateral dimension of mirror $M_L$
$M_{L-1}Z$ is maximum sag amount of mirror $M_{L-1}$
$M_{L-1}W$ is lateral dimension of mirror $M_{L-1}$.
   Such a configuration provides a head-up display system small in size that makes image distortion small in an entire viewpoint area of an observer.

EP 3 608 702 A1

# FIG. 2

**Description**

TECHNICAL FIELD

The present disclosure relates to a head-up display system that displays a display image as a virtual image using a reflection member, and a moving body equipped with the head-up display system.

BACKGROUND ART

PTL 1 relates to a head-up display apparatus that makes a virtual image of a display image visible by projecting the display image on a projection surface having a concave surface shape formed on a windshield. PTL 1 discloses the head-up display apparatus in which an imaging surface of a screen on which laser light projected from a laser scanner is imaged is formed in a convex surface shape that corrects field curvature of the virtual image.

Citation List

Patent Literature

PTL 1: Unexamined Japanese Patent Publication No. 2013-25205

SUMMARY OF THE INVENTION

Objects of the present disclosure are to provide a head-up display system small in size that makes image distortion small in an entire viewpoint area of an observer, and a moving body equipped with the head-up display system.
One of the above-mentioned objects is achieved by the following head-up display system. That is, the present disclosure provides a head-up display system configured to project an image on a display member disposed in an eye direction of an observer, and includes a display device configured to display the image and a projection optical system configured to project on the display member the image displayed on the display device. Then, the projection optical system includes, a mirror $M_L$ configured to reflect a light beam toward the display member and a mirror $M_{L-1}$ configured to reflect the light beam toward mirror $M_L$ the mirror $M_L$ and the mirror $M_{L-1}$ being arranged in a stated order in a direction from the display member to the display device,, and satisfies following condition (1).

$$0.01 < |M_L D/M_L W| \times |M_{L-1} Z/M_{L-1} W| \qquad (1)$$

where

$M_L D$ is depth of mirror $M_L$
$M_L W$ is lateral dimension of mirror $M_L$
$M_{L-1} Z$ is maximum sag amount of mirror $M_{L-1}$
$M_{L-1} W$ is lateral dimension of mirror $M_{L-1}$.

The present disclosure makes it possible to provide a head-up display system small in size that makes image distortion small in an entire viewpoint area of the observer, and a moving body equipped with the head-up display system.

BRIEF DESCRIPTION OF DRAWINGS

FIG. 1 is a schematic view illustrating a cross section of a vehicle mounting thereon a display apparatus of the present disclosure.
FIG. 2 is a schematic view for illustrating an optical cross-section for illustrating a head-up display system according to first to fourth exemplary embodiments.
FIG. 3 is a diagram for illustrating a shape of a first mirror according to another exemplary embodiment.
FIG. 4 is a view illustrating image distortion in a viewpoint area of an observer according to numerical example 1.
FIG. 5 is a view illustrating image distortion in the viewpoint area of the observer according to numerical example 2.
FIG. 6 is a view illustrating image distortion in the viewpoint area of the observer according to numerical example 3.

FIG. 7 is a view illustrating image distortion in the viewpoint area of the observer according to numerical example 4.

FIG. 8 is a diagram illustrating a coordinate system and sizes according to condition (1).

FIG. 9 is another diagram illustrating the coordinate system and the sizes according to condition (1).

FIG. 10 is a diagram illustrating a coordinate system of the numerical examples according to the first to fourth exemplary embodiments.

DESCRIPTION OF EMBODIMENTS

Hereinafter, exemplary embodiments will be described in detail with reference to the drawings as appropriate. However, a detailed description more than necessary may be omitted. For example, a detailed description of well-known matters and a duplicate description of substantially identical configurations may be omitted. This is to avoid unnecessary redundancy in the following description and to make the following description easily understandable to those skilled in the art.

The applicant provides the attached drawings and the following description such that one skilled in the art can sufficiently understand the present disclosure, and therefore, they do not intend to restrict the subject matters of claims.

(First to fourth exemplary embodiments)

[1-1. Configuration]

[1-1-1. General configuration of head-up display system]

Specific exemplary embodiments and examples of head-up display system 10 of the present disclosure will be described below with reference to the drawings.

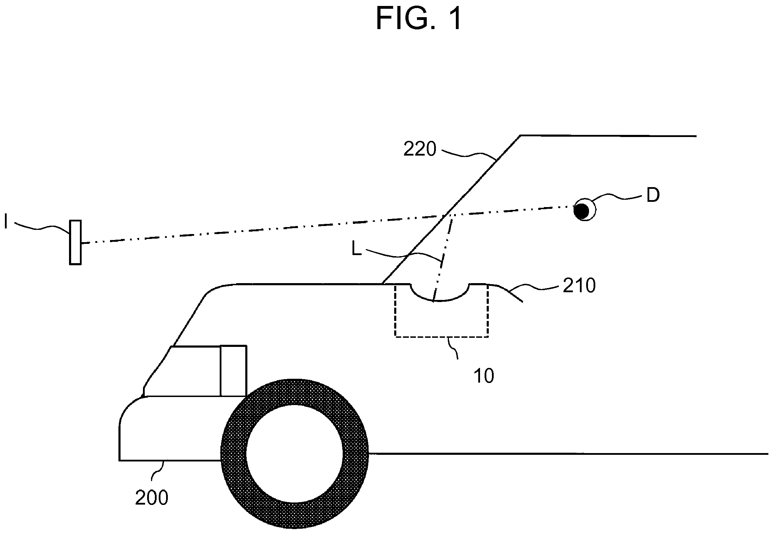

FIG. 1 is a schematic view illustrating a cross-section of vehicle 200 mounting thereon head-up display system 10 according to the present disclosure. As illustrated in FIG. 1, head-up display system 10 is disposed inside dashboard 210 below windshield 220 of vehicle 200.

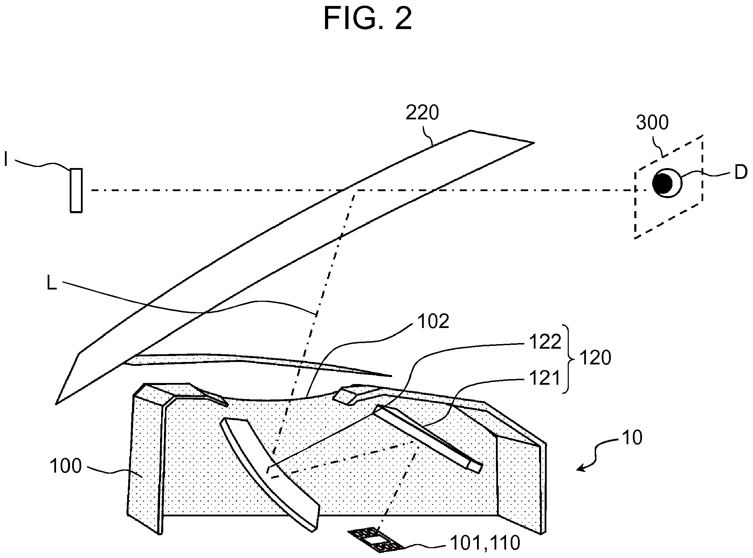

FIG. 2 is a schematic cross-sectional view of head-up display system 10 according to the first to fourth exemplary embodiments. As illustrated in FIG. 2, head-up display system 10 includes housing 100, projection optical system 120, and display device 101. Head-up display system 10 makes display image 110 displayed by display device 101 be reflected via windshield 220 to introduce the image to observer D inside vehicle 200 and provide virtual image I.

Herein, an optical path of display image 110 that forms a center of virtual image I shall be reference light beam L. Note that, a viewpoint of observer D shall exist at a center of viewpoint area 300.

Housing 100 includes opening 102. A transparent cover can be provided on opening 102. Providing the transparent cover having a lens shape makes it possible to adjust magnification of the virtual image. Head-up display system 10 according to the first exemplary embodiment includes housing 100. However, housing 100 is not a necessary component, and dashboard 210 of the vehicle may serve as the housing.

Projection optical system 120 includes first mirror 121 (an example of mirror $M_{L-1}$) and second mirror 122 (an example of mirror $M_L$) in a stated order in a direction from display device 101 to windshield 220 (an example of the display member). That is, projection optical system 120 includes a reflection optical element composed of mirror $M_{L-1}$ and mirror $M_L$. Display image 110 displayed by display device 101 is reflected via first mirror 121, reflected via second mirror 122, reflected via windshield 220, and reaches viewpoint area 300 of observer D. Then, observer D views display image 110 as virtual image I. Herein, viewpoint area 300 denotes an area where observer D can observe the entire of virtual image I without lacking.

Mirror $M_L$ may also have a movable mechanism for adjusting a position display of the image to be projected on the display member.

In display device 101, display image information is controlled by a controller such as a microprocessor not shown. The display image information includes, for example, a road course plan, a distance to a front vehicle, a vehicular battery remaining amount, and a present vehicle speed. The various items of display image information can be displayed on display device 101. As display device 101, a liquid crystal display device (LCD), an organic light emitting diode (electroluminescence), a plasma display, or the like is used.

[1-1-2. Configuration of projection optical system and display apparatus]

In head-up display system 10 according to the first to fourth exemplary embodiments, the position of display device 101 is disposed below first mirror 121. Furthermore, a display surface of display device 101 is oriented toward first mirror 121. In this context, display device 101 is desirably disposed such that a light beam emitted from display device 101 inclines with respect to normal line of the display surface. This makes it possible to prevent stray light caused by external light that is introduced in the housing and reflected on the display surface of display device 101.

Furthermore, first mirror 121 is disposed such that its reflection surface is eccentric in a direction in which an image displayed on display device 101 is reflected on second mirror 122.

A reflection area of second mirror 122 is larger than a reflection area of first mirror 121 to enlarge the image to display as virtual image I. Herein, the reflection area is an area of the mirror that reflects incident light, and a shape of the mirror becomes larger as the reflection area becomes larger.

Second mirror 122 is disposed in a horizontal direction of housing 100 and in a vehicle front side with respect to first mirror 121. Furthermore, second mirror 122 is disposed such that its reflection surface is eccentric in a direction in which reflection light from first mirror 121 is incident on windshield 220.

Furthermore, a light beam emitted toward a center of a viewpoint area 300 of the observer D has a first angle and a second angle larger than the first angle, the light beam being among light beams emitted from a center of the image displayed on the display device 101, the first angle being made with a line parallel to a longer side of a display surface of the display device 101, the second angle being made with a line parallel to a shorter side of the display surface.

In the first to third exemplary embodiments, first mirror 121 is a mirror having a free-form surface shape having a convex surface shape. Furthermore, second mirror 122 is a mirror having a free-form surface shape having a concave surface shape. By making first mirror 121 have the convex surface shape, asymmetric eccentric distortion generated on second mirror 122 can be successfully corrected. Furthermore, by making second mirror 122 have the concave surface shape, a virtual image magnified more than the image of display device 101 can be viewed by observer D.

Furthermore, a free-form surface shape is employed in first mirror 121 and second mirror 122. This is to correct distortion of the virtual image generated by reflection such that good virtual image I can be seen in entire viewpoint area 300. However, only any one of first mirror 121 and second mirror 122 may have a free-form surface and the other one may have a shape such as a flat surface or a toroidal shape.

In the fourth exemplary embodiment, first mirror 121 is a mirror having a free-form surface shape having a concave surface shape. Furthermore, second mirror 122 is a mirror having a free-form surface shape having a concave surface shape. By making the reflection surfaces of first mirror 121 and second mirror 122 have the concave surface shape, a virtual image magnified more than the image of display device 101 can be viewed by observer D. Furthermore, making the reflection surfaces of first mirror 121 and second mirror 122 have the concave surface makes it possible to disperse power held by one mirror, making it possible to reduce distortion aberration sensitivity during assembling.

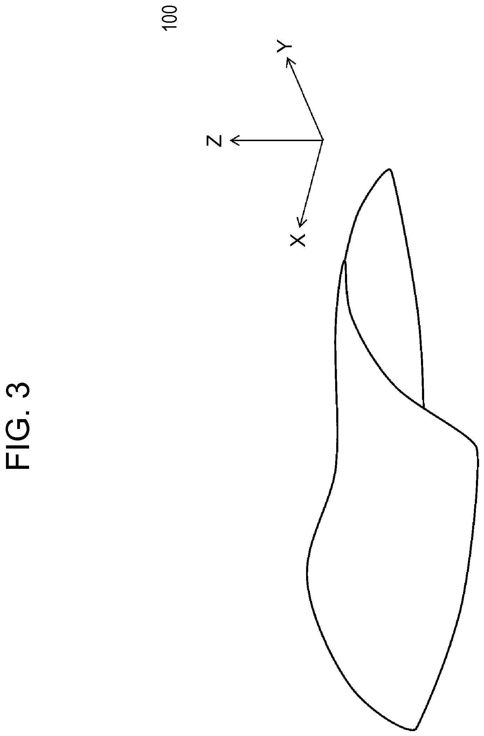

First mirror 121 and second mirror 122 used in head-up display system 10 according to the first to fourth exemplary embodiments have a rotation asymmetric shape. However, the shape may be a surface shape of a so-called saddle type in which signs of curvatures are different in X direction and Y direction as shown in FIG. 3.

[1-2. Effects and others]

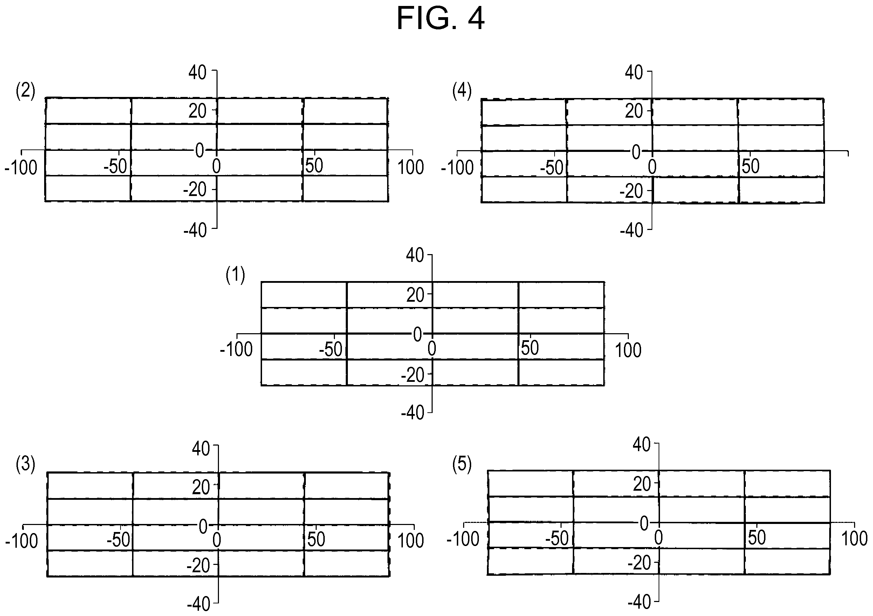

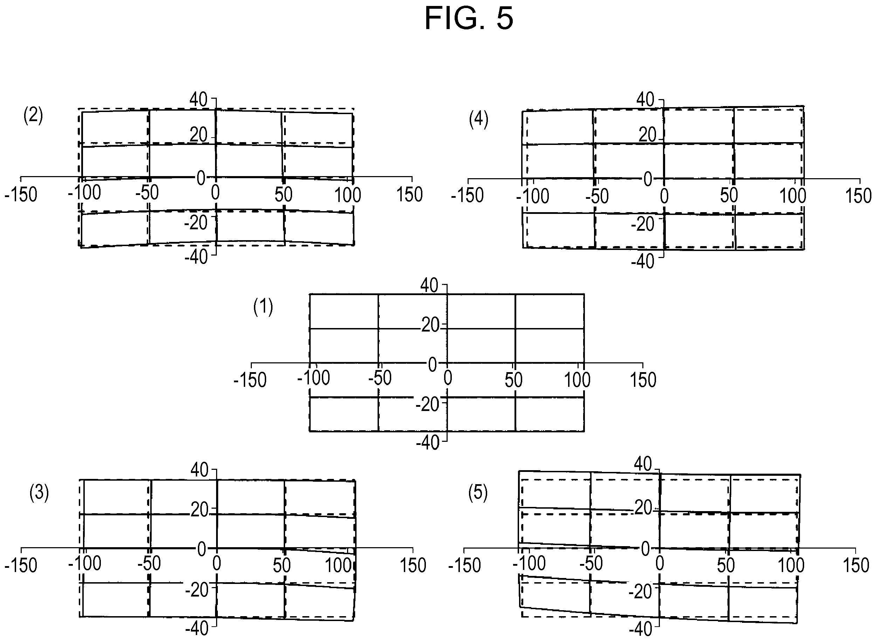

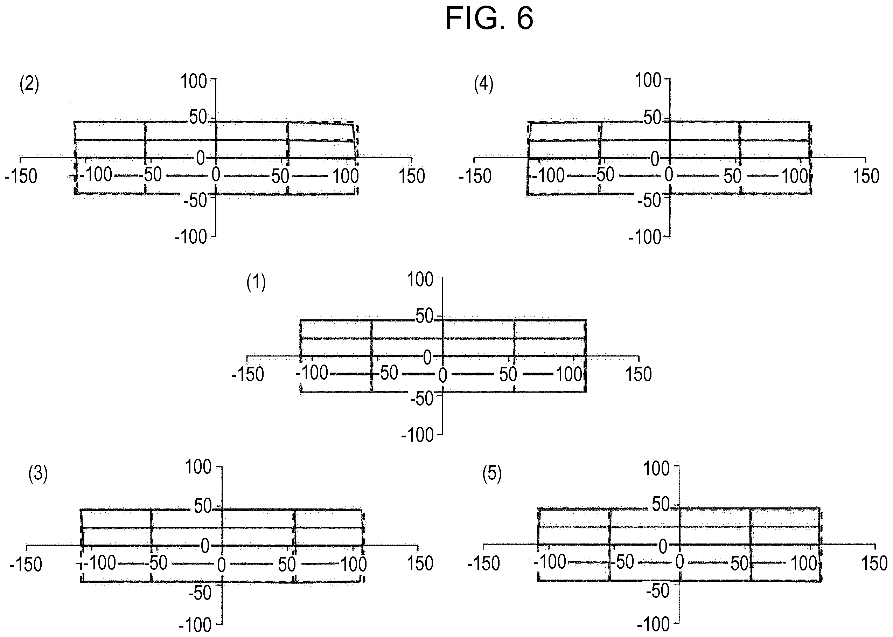

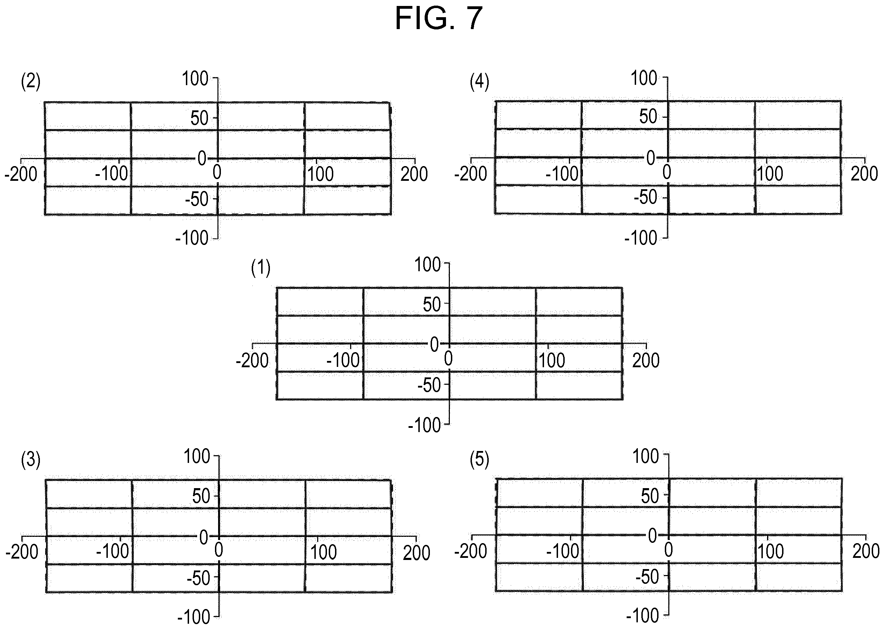

Effects of head-up display system 10 configured above will be described below with reference to FIG. 4 to FIG. 7.

FIGS. 4 to 7 are schematic views when virtual image I is viewed from viewpoint area 300 in respective the first to fourth exemplary embodiments. In head-up display system 10 of the present disclosure, viewpoint area 300 has a rectangular shape of 130 mm in its horizontal direction × 40 mm in its vertical direction. A broken line is an ideal shape of virtual image I when viewed from viewpoint area 300. A solid line shows virtual image I projected by using head-up display system 10 in each exemplary embodiment.

In each of schematic views of FIGS. 4 to 7, part (1) is a view illustrating image distortion when virtual image I is viewed from the center position of viewpoint area 300 of observer D. Part (2) is a view illustrating image distortion when virtual image I is viewed from an upper left position of viewpoint area 300. Part (3) is a view illustrating image distortion when virtual image I is viewed from a lower left position of viewpoint area 300. Part (4) is a view illustrating image distortion when virtual image I is viewed from an upper right position of viewpoint area 300. Part (5) is a view illustrating image distortion when virtual image I is viewed from a lower right position of viewpoint area 300.

Using head-up display system 10 of the present disclosure successfully corrects image distortion in the entire area of viewpoint area 300. That is, in viewpoint area 300, observer D can view a good virtual image at any position.

[1-3. Desirable conditions]

Hereinafter, desirable conditions for head-up display system 10 according to the first to fourth exemplary embodiments to satisfy will be described. Note that a plurality of preferable conditions are regulated with respect to head-up display system 10 according to each exemplary embodiment. Then, a configuration that satisfies all the plurality of conditions is most preferable. However, by satisfying individual condition, an optical system that provides an effect corresponding to the condition can be also obtained.

Head-up display system 10 according to the first to fourth exemplary embodiments includes display device 101 that displays an image, and projection optical system 120 that projects display image 110 displayed on display device 101. Then, projection optical system 120 has first mirror 121 and second mirror 122 in order of an optical path from display device 101 toward windshield 220.

Head-up display system 10 according to the first to fourth exemplary embodiments projects display image 110 displayed on display device 101 on windshield 220 to make virtual image I be viewed by observer D. This makes it possible to make observer D view the image displayed on display device 101 without interrupting forward visibility of observer D.

In head-up display system 10 of the present disclosure, first mirror 121 desirably has a free-form surface shape. This successfully corrects image distortion generated on windshield 220, making it possible to view a good image having less image distortion in entire viewpoint area 300 of observer D.

In head-up display system 10 of the present disclosure, second mirror 122 desirably has a free-form surface shape. This successfully corrects image distortion generated on windshield 220, making it possible to view a good image having less image distortion in entire viewpoint area 300 of observer D.

In head-up display system 10 of the present disclosure, the reflection surface of first mirror 121 is a concave surface or a convex surface. This makes it possible to suppress distortion of a virtual image generated by reflection as compared with a case where first mirror 121 has a flat surface.

In head-up display system 10 of the present disclosure, an outer shape of first mirror 121 is a trapezoid shape. This makes it possible to reduce an unnecessary area other than an area on which an image is reflected on first mirror 121, making it possible to downsize head-up display system 10. Note that the outer shape of first mirror 121 is not limited to the trapezoid shape, and can be appropriately changed depending on a shape of an effective area.

Head-up display system 10 of the present disclosure satisfies following condition (1) when a mirror that reflects a light beam toward windshield 220 is mirror $M_L$, and a mirror that reflects the light beam toward mirror $M_L$ is $M_{L-1}$.

$$0.01 < |M_L D/M_L W| \times |M_{L-1} Z/M_{L-1} W| \ ... \ (1)$$

where

$M_L D$: depth of mirror $M_L$
$M_L W$: lateral dimension of mirror $M_L$
$M_{L-1} Z$: maximum sag amount of mirror $M_{L-1}$
$M_{L-1} W$: lateral dimension of mirror $M_{L-1}$.

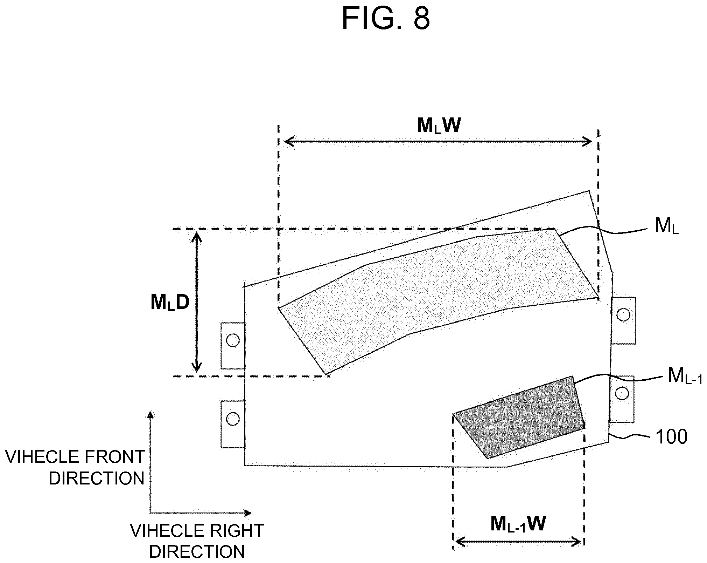

FIG. 8 is a diagram of housing 100 viewed from a vertical direction top side. As illustrated in FIG. 8, $M_L D$ denotes a maximum size in a vehicle front-back direction of mirror $M_L$, $M_L W$ denotes a maximum size in a vehicle left-right direction of mirror $M_L$, and $M_{L-1} W$ denotes a maximum size in the vehicle left-right direction of mirror $M_{L-1}$.

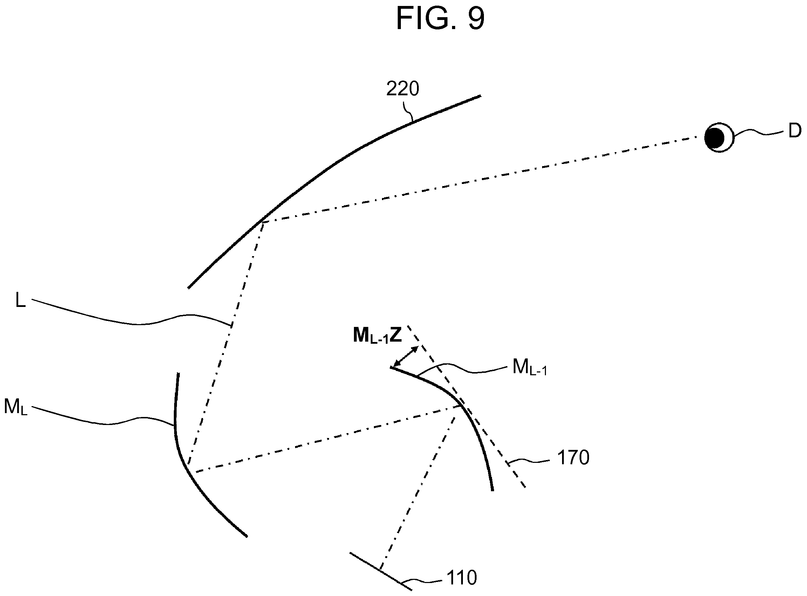

FIG. 9 is a diagram illustrating a coordinate system and sizes according to condition (1). As illustrated in FIG. 9, a tangential plane of mirror $M_{L-1}$ including an intersection point between the reflection surface of mirror $M_{L-1}$ and reference light beam L is defined as tangential plane 170, and a maximum distance among distances from tangential plane 170 to the reflection surface of mirror $M_{L-1}$ shall be $M_{L-1} Z$.

Condition (1) defines a relationship between a size and a sag amount of mirror $M_L$ and mirror $M_{L-1}$. Falling below a lower limit of condition (1) means that power of mirror $M_{L-1}$ is weak or inclination arrangement in the front-back direction of mirror $M_L$ is small with respect to a width of each of mirror $M_{L-1}$, mirror $M_L$. When the power of mirror $M_{L-1}$ is weak, it becomes difficult to correct image distortion of virtual image I. Furthermore, when the inclination arrangement in the front-back direction of mirror $M_L$ is small, rotation of an image reflected on mirror $M_L$ becomes large, disadvantageously enlarging a size of mirror $M_L$.

Furthermore, satisfying following condition (1a) makes it possible to make the above-mentioned effects further successful.

$$0.015 < |M_L D/M_L W| \times |M_{L-1} Z/M_{L-1} W| \ ... \ (1a)$$

Also, it is desirable that following condition (1b) be satisfied as well as the condition (1).

$$|M_L D/M_L W| \times |M_{L-1} Z/M_{L-1} W| < 0.04 \ ... \ (1b)$$

Exceeding an upper limit of condition (1b) means that the power of mirror $M_{L-1}$ is strong or the inclination arrangement in the front-back direction of mirror $M_L$ is large with respect to the width of each of mirror $M_{L-1}$, mirror $M_L$. When the power of mirror $M_{L-1}$ is strong, a zooming load of mirror $M_{L-1}$ becomes too large, disadvantageously enlarging mirror $M_{L-1}$. Furthermore, when the inclination arrangement in the front-back direction of mirror $M_L$ is large, the size of hosing 100 is disadvantageously enlarged.

Furthermore, satisfying following condition (1c) makes it possible to make the effects described above further successful.

$$|M_LD/M_LW| \times |M_{L-1}Z/M_{L-1}W| < 0.03 \ldots (1c)$$

(Numerical examples)

Hereinafter, numerical examples obtained by specifically performing the head-up display system according to the first to fourth exemplary embodiments will be described. Note that in each numerical example, a unit of length in each table is all "mm" and a unit of angle is all "°". Furthermore, in each numerical example, a free-form surface is defined by the following equations.

[Equation 1]

$$z = \frac{cr^2}{\sqrt{1-(1+k)c^2r^2}} + \sum_{j=2} c_j x^m y^n$$

[Equation 2]

$$j = \frac{(m+n)^2 + m + 3n}{2} + 1$$

In the equations, z is a sag amount at a position (x, y) from an axis defining a plane, r is a radius of curvature at an origin of the axis defining the plane, c is a curvature at the origin of the axis defining the plane, k is a conic constant, $C_j$ is a coefficient in a monomial $x^m y^n$.

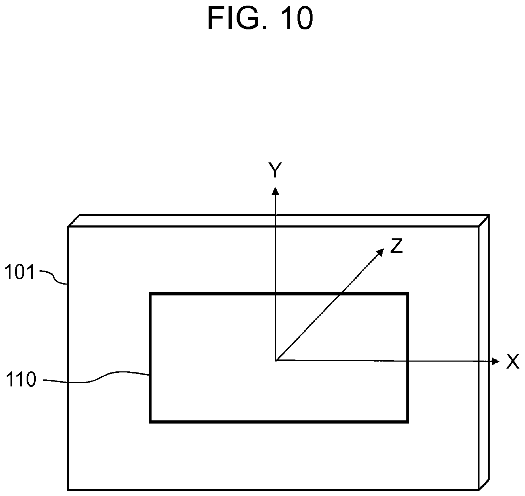

FIG. 10 is a diagram illustrating a coordinate system of the numerical examples according to the first to fourth exemplary embodiments. In each numerical example, the coordinate origin that becomes a reference is a center of the display image on the display device, and defines X, Y, Z axes as illustrated in FIG. 10.

Further, in eccentricity data in each numerical example, ADE denotes an amount of rotation of a mirror about the X-axis from a Z-axis direction to a Y-axis direction, BDE denotes an amount of rotation of the mirror about the Y-axis from an X-axis direction to the Z-axis direction, and CDE denotes an amount of rotation of the mirror about the Z-axis from the X-axis direction to the Y-axis direction.

(Numerical Example 1)

Projection optical system 120 of numerical example 1 corresponds to the first exemplary embodiment. Configuration data of projection optical system 120 of numerical example 1 is shown in Table 1, and coefficients of the polynomial free-form surface of numerical example 1 are shown in Table 2.

[Table 1]

| | Surface number | Shape | Radius of curvature | | Eccentricity data | | | | | | |
|---|---|---|---|---|---|---|---|---|---|---|---|
| | | | X-radius of curvature | Y-radius of curvature | X | Y | Z | ADE | BDE | CDE | |
| Display surface | 1 | | | | 0 | 0 | 0 | 0 | 0 | 0 | |
| First mirror | 2 | Free-form surface | 74.5 | | 5.083 | 14.834 | 40.755 | -8.474 | 9.699 | -7.666 | |
| Second mirror | 3 | Free-form surface | -268.0 | | 44.967 | 73.100 | -29.731 | -9.582 | 14.621 | -11.337 | |
| Windshield | 4 | Toroidal | -2500 | -10000 | 13.504 | 112.063 | 164.894 | 83.432 | 5.696 | -4.059 | |
| Observer | 5 | | | | 31.354 | -263.811 | 757.165 | 143.688 | 2.305 | -12.165 | |

[Table 2]

| Surface number | Polynomial coefficient | | Surface number | Polynomial coefficient | |
|---|---|---|---|---|---|
| | C1 | 0.000000E+00 | | C1 | 0.000000E+00 |
| | C2 | 0.000000E+00 | | C2 | 0.000000E+00 |
| | C3 | 0.000000E+00 | | C3 | 0.000000E+00 |
| | C4 | -3.889322E-03 | | C4 | 3.668807E-03 |
| | C5 | -1.140602E-03 | | C5 | -9.397847E-05 |
| | C6 | -2.852333E-03 | | C6 | 3.289357E-03 |
| | C7 | -1.175025E-05 | | C7 | -6.805239E-07 |
| | C8 | -2.227307E-05 | | C8 | -2.506622E-06 |
| | C9 | -1.959217E-05 | | C9 | -6.289453E-07 |
| | C10 | -3.135374E-05 | | C10 | -2.251343E-06 |
| 2 | C11 | -4.738907E-07 | 3 | C11 | 7.722795E-09 |
| | C12 | -1.855805E-07 | | C12 | 1.929269E-09 |
| | C13 | -8.227017E-07 | | C13 | 1.668530E-08 |
| | C14 | 6.940548E-07 | | C14 | 6.642674E-09 |
| | C15 | -3.817544E-07 | | C15 | 9.160802E-09 |
| | C16 | 3.383532E-09 | | C16 | -2.406730E-12 |
| | C17 | -4.494973E-09 | | C17 | -2.410751E-11 |
| | C18 | 1.561764E-08 | | C18 | 2.073391E-11 |
| | C19 | -6.869173E-08 | | C19 | -1.825230E-10 |
| | C20 | 9.407151E-08 | | C20 | 1.857056E-10 |
| | C21 | -5.420771E-08 | | C21 | -1.027708E-10 |

(Numerical Example 2)

Projection optical system 120 of numerical example 2 corresponds to the second exemplary embodiment. Configuration data of projection optical system 120 of numerical example 2 is shown in Table 3, and coefficients of the polynomial free-form surface of numerical example 2 are shown in Table 4.

[Table 3]

| | Surface number | Shape | Radius of curvature | | Eccentricity data | | | | | |
|---|---|---|---|---|---|---|---|---|---|---|
| | | | X-radius of curvature | Y-radius of curvature | X | Y | Z | ADE | BDE | CDE |
| Display surface | 1 | | | | 0 | 0 | 0 | 0 | 0 | 0 |
| First mirror | 2 | Free- form surface | 97.1 | | 5.083 | 14.834 | 40.755 | -2.301 | 7.801 | -7.199 |
| Second mirror | 3 | Free- form surface | -252.4 | | 40.925 | 55.826 | -42.844 | -2.455 | 9.952 | -12.370 |
| Windshield | 4 | Toroidal | -2500 | -10000 | 41.251 | 105.524 | 176.669 | 84.405 | 4.708 | 1.813 |
| Observer | 5 | | | | 118.274 | -255.017 | 773.713 | 144.892 | 6.903 | -8.405 |

[Table 4]

| Surface number | Polynomial coefficient | | Surface number | Polynomial coefficient | |
|---|---|---|---|---|---|
| | C1 | 0.000000E+00 | | C1 | 0.000000E+00 |
| | C2 | 0.000000E+00 | | C2 | 0.000000E+00 |
| | C3 | 0.000000E+00 | | C3 | 0.000000E+00 |
| | C4 | -4.926473E-03 | | C4 | 3.544541E-03 |
| | C5 | -9.154287E-05 | | C5 | -1.225662E-04 |
| | C6 | -5.551427E-03 | | C6 | 3.164418E-03 |
| | C7 | -7.457614E-06 | | C7 | -1.043107E-06 |
| | C8 | -1.467424E-05 | | C8 | -2.340693E-06 |
| | C9 | 2.736122E-06 | | C9 | -7.417448E-07 |
| | C10 | -2.781637E-05 | | C10 | -2.540587E-06 |
| 2 | C11 | -3.043821E-07 | 3 | C11 | 4.628000E-09 |
| | C12 | 1.086610E-08 | | C12 | 2.606382E-09 |
| | C13 | -1.212193E-07 | | C13 | 1.292750E-08 |
| | C14 | -1.002882E-07 | | C14 | -1.254061E-10 |
| | C15 | -4.765067E-07 | | C15 | 1.851119E-08 |
| | C16 | 9.133313E-10 | | C16 | -1.819180E-11 |
| | C17 | 2.733132E-09 | | C17 | 2.522055E-12 |
| | C18 | -3.353294E-09 | | C18 | 2.254304E-11 |
| | C19 | -8.241253E-09 | | C19 | -3.720821E-10 |
| | C20 | 1.121593E-08 | | C20 | 3.847241E-10 |
| | C21 | -1.026651E-08 | | C21 | -1.331588E-10 |

(Numerical Example 3)

Projection optical system 120 of numerical example 3 corresponds to the third exemplary embodiment. Configuration data of projection optical system 120 of numerical example 3 is shown in Table 5, and coefficients of the polynomial free-form surface of numerical example 3 are shown in Table 6.

[Table 5]

| | Surface number | Shape | Radius of curvature | | Eccentricity data | | | | | |
|---|---|---|---|---|---|---|---|---|---|---|
| | | | X-radius of curvature | Y-radius of curvature | X | Y | Z | ADE | BDE | CDE |
| Display surface | 1 | | | | 0 | 0 | 0 | 0 | 0 | 0 |
| First mirror | 2 | Free-form surface | 115.5 | | 0.019 | 27.571 | 47.754 | -3.190 | 1.570 | -6.588 |
| Second mirror | 3 | Free-form surface | -174.0 | | 5.476 | 97.681 | -47.274 | -8.420 | 10.060 | -4.534 |
| Windshield | 4 | Toroidal | -2300 | -5000 | -118.115 | 137.045 | 352.969 | 80.116 | -5.067 | -17.331 |
| Observer | 5 | | | | -348.158 | -242.455 | 820.812 | 142.809 | -20.835 | 2.493 |

[Table 6]

| Surface number | Polynomial coefficient | | Surface number | Polynomial coefficient | |
|---|---|---|---|---|---|
| | C1 | 0.000000E+00 | | C1 | 0.000000E+00 |
| | C2 | 0.000000E+00 | | C2 | 0.000000E+00 |
| | C3 | 0.000000E+00 | | C3 | 0.000000E+00 |
| | C4 | -4.660058E-03 | | C4 | 4.040368E-03 |
| | C5 | 4.822156E-04 | | C5 | 1.238345E-04 |
| | C6 | -5.780335E-03 | | C6 | 3.412235E-03 |
| | C7 | 5.786242E-06 | | C7 | 9.536949E-07 |
| | C8 | 7.697644E-06 | | C8 | -4.053113E-07 |
| | C9 | 1.378249E-05 | | C9 | 1.969863E-06 |
| | C10 | 8.704499E-06 | | C10 | 1.786994E-07 |
| 2 | C11 | -2.416340E-07 | 3 | C11 | 2.312050E-08 |
| | C12 | -5.498882E-08 | | C12 | 9.091220E-10 |
| | C13 | -2.628414E-07 | | C13 | 4.427086E-08 |
| | C14 | -9.596673E-08 | | C14 | -8.376937E-09 |
| | C15 | -2.714240E-07 | | C15 | -7.592592E-10 |
| | C16 | -5.447252E-11 | | C16 | 1.840384E-11 |
| | C17 | 9.577716E-10 | | C17 | 2.206245E-11 |
| | C18 | 1.377973E-09 | | C18 | 1.303955E-10 |
| | C19 | -3.938415E-10 | | C19 | -7.721818E-11 |
| | C20 | -5.536787E-10 | | C20 | 1.560674E-11 |
| | C21 | -1.102301E-09 | | C21 | -2.128466E-10 |

(Numerical Example 4)

Projection optical system 120 of numerical example 4 corresponds to the fourth exemplary embodiment. Configuration data of projection optical system 120 of numerical example 4 is shown in Table 7, and coefficients of the polynomial free-form surface of numerical example 4 are shown in Table 8.

[Table 7]

| | Surface number | Shape | Radius of curvature | | Eccentricity data | | | | | |
|---|---|---|---|---|---|---|---|---|---|---|
| | | | X-radius of curvature | Y-radius of curvature | X | Y | Z | ADE | BDE | CDE |
| Display surface | 1 | | | | 0 | 0 | 0 | 0 | 0 | 0 |
| First mirror | 2 | Free-form surface | 160.6 | | -9.303 | 9.974 | 37.225 | -12.971 | -0.632 | -3.257 |
| Second mirror | 3 | Free-form surface | -318.9 | | -43.760 | 96.384 | -61.857 | -19.144 | -5.679 | -8.203 |
| Windshield | 4 | Toroidal | -2900 | -7000 | -1.175 | 150.019 | 169.581 | 67.776 | -6.563 | -1.004 |
| Observer | 5 | | | | -103.128 | -476.745 | 735.591 | 127.388 | -7.828 | 11.156 |

[Table 8]

| Surface number | Polynomial coefficient | | Surface number | Polynomial coefficient | |
|---|---|---|---|---|---|
| | C1 | 0.000000E+00 | | C1 | 0.000000E+00 |
| | C2 | 0.000000E+00 | | C2 | 0.000000E+00 |
| | C3 | 0.000000E+00 | | C3 | 0.000000E+00 |
| | C4 | -1.754483E-03 | | C4 | 2.859706E-03 |
| | C5 | 2.809306E-04 | | C5 | 1.679720E-04 |
| | C6 | -3.766153E-03 | | C6 | 2.509203E-03 |
| | C7 | 6.271249E-06 | | C7 | 5.110568E-07 |
| | C8 | -1.277670E-05 | | C8 | -1.149673E-06 |
| | C9 | 1.034713E-07 | | C9 | 1.770886E-07 |
| | C10 | -4.257452E-06 | | C10 | -1.087119E-06 |
| 2 | C11 | -1.356414E-07 | 3 | C11 | 4.014016E-09 |
| | C12 | -5.949794E-08 | | C12 | -5.998517E-10 |
| | C13 | 2.552599E-08 | | C13 | 9.308105E-09 |
| | C14 | 1.510860E-08 | | C14 | 1.222787E-09 |
| | C15 | 1.308172E-08 | | C15 | 3.812154E-09 |
| | C16 | -1.479740E-10 | | C16 | 8.759793E-12 |
| | C17 | 5.933131E-10 | | C17 | -5.780092E-12 |
| | C18 | 9.655838E-11 | | C18 | 1.604554E-11 |
| | C19 | -9.169734E-10 | | C19 | -2.995483E-12 |
| | C20 | -2.023240E-10 | | C20 | -1.112808E-12 |
| | C21 | -1.152090E-10 | | C21 | 7.255928E-12 |

Table 9 below illustrates a display image size, a virtual image size, a distance from a pupil of observer D to virtual image I, and the value of condition (1) in each numerical example.

[Table 9]

| | | Numerical example 1 | Numerical example 2 | Numerical example 3 | Numerical example 4 |
|---|---|---|---|---|---|
| Display size | X | 30 | 28.9 | 37.9 | 63.9 |
| | Y | 12.3 | 11.6 | 17.8 | 23.8 |
| Virtual image size | X | 174.6 | 209.6 | 216.6 | 350 |
| | Y | 52.4 | 69.8 | 90.8 | 139.7 |
| Distance from observer to virtual image | | 2000 | 2000 | 2200 | 2800 |
| Condition (1) | | 0.016 | 0.010 | 0.015 | 0.012 |

INDUSTRIAL APPLICABILITY

A head-up display system according to the present disclosure is preferable for a head-up display system requiring high image quality such as a head-up display device for in-vehicle use or the like.

REFERENCE MARKS IN THE DRAWINGS

10: head-up display system
100: housing
101: display device
102: opening
110: display image
120: projection optical system
121: first mirror (mirror $M_{L-1}$)
122: second mirror (mirror $M_L$)
200: vehicle
210: dashboard
220: windshield (display member)
300: viewpoint area
D: observer
I: virtual image
L: reference light beam

## Claims

1.  A head-up display system configured to project an image on a display member disposed in an eye direction of an observer, the head-up display system comprising:

    a display device configured to display the image; and
    a projection optical system configured to project on the display member the image displayed on the display device, wherein the projection optical system includes, wherein

       a mirror $M_L$ configured to reflect a light beam toward the display member, and
       $M_L$, a mirror $M_{L-1}$ configured to reflect the light beam toward mirror
       the mirror $M_L$ and mirror $M_{L-1}$ being arranged in a stated order in a direction from the display member to the display device, and

    satisfies following condition (1)

    $$0.01 < |M_L D/M_L W| \times |M_{L-1}Z/M_{L-1}W| \qquad (1)$$

    where

       $M_L D$ is a depth of the mirror $M_L$
       $M_L W$ is a lateral dimension of the mirror $M_L$
       $M_{L-1}Z$ is a maximum sag amount of the mirror $M_{L-1}$
       $M_{L-1}W$ is a lateral dimension of the mirror $M_{L-1}$.

2.  The head-up display system according to claim 1, wherein the mirror $M_L$ includes a movable mechanism configured to adjust a display position of the image to be projected on the display member.

3.  The head-up display system according to claim 1 or claim 2, wherein a light beam emitted toward a center of a viewpoint area of the observer has a first angle and a second angle larger than the first angle, the light beam being among light beams emitted from a center of the image displayed on the display device, the first angle being made with a line parallel to a longer side of a display surface of the display device, the second angle being made with a line parallel to a shorter side of the display surface.

4.  The head-up display system according to any one of claims 1 to 3, wherein the projection optical system includes a reflection optical element, the reflection optical system including the mirror $M_{L-1}$ and the mirror $M_L$.

5. The head-up display system according to any one of claims 1 to 4, wherein the mirror $M_L$ includes a reflection surface having a free-form surface shape.

6. The head-up display system according to any one of claims 1 to 5, wherein the mirror $M_{L-1}$ includes a reflection surface having a free-form surface shape.

7. The head-up display system according to any one of claims 1 to 6, further comprising a housing, wherein the display device and the projection optical system are disposed inside the housing.

8. A moving body comprising the head-up display system according to any one of claims 1 to 7.

FIG. 1

EP 3 608 702 A1

FIG. 2

FIG. 3

# FIG. 4

FIG. 5

# FIG. 6

(2)

(4)

(1)

(3)

(5)

EP 3 608 702 A1

# FIG. 7

(2)

(4)

(1)

(3)

(5)

EP 3 608 702 A1

# FIG. 8

EP 3 608 702 A1

FIG. 9

EP 3 608 702 A1

FIG. 10

EP 3 608 702 A1

## INTERNATIONAL SEARCH REPORT

| International application No. |
| --- |
| PCT/JP2018/010499 |

### A. CLASSIFICATION OF SUBJECT MATTER

Int. Cl. G02B27/01(2006.01)i, B60K35/00(2006.01)i, G02B13/18(2006.01)i, G02B17/08(2006.01)i

According to International Patent Classification (IPC) or to both national classification and IPC

### B. FIELDS SEARCHED

Minimum documentation searched (classification system followed by classification symbols)
Int. Cl. G02B27/01, B60K35/00, G02B13/18, G02B17/08

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2016/079926 A1 (PANASONIC INTELLECTUAL PROPERTY MANAGEMENT CO., LTD.) 26 May 2016, paragraphs [0020]-[0042], [0065]-[0073], fig. 2-4, 10 & US 2017/0248786 A1, paragraphs [0033]-[0058], [0086]-[0097], fig. 2-4, 10 & EP 3223057 A1 | 1, 3-8<br>2 |
| Y | JP 2016-80900 A (MINEBEA CO., LTD.) 16 May 2016, paragraphs [0018]-[0025], fig. 1-5 & WO 2016/059803 A1, paragraphs [0017]-[0024], fig. 1-5 | 2 |
| A | JP 2015-87594 A (ALPS ELECTRIC CO., LTD.) 07 May 2015, entire text, all drawings & CN 104597601 A | 1-8 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17.05.2018 | Date of mailing of the international search report<br>05.06.2018 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/010499 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | US 2008/0278822 A1 (CHOI, Ho Young) 13 November 2008, entire text, all drawings & EP 1990675 A2 & DE 202008018580 U & KR 10-2008-0100040 A & KR 10-2009-0075997 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013025205 A